# EUROPÄISCHE PATENTANMELDUNG

(11) **EP 1 522 569 A2**
(43) Veröffentlichungstag der Anmeldung: **13.04.2005**
(21) Anmeldenummer: 04400039.6
(22) Anmeldetag: 21.07.2004
(51) Int. Cl.: C10J 3/66, C10B 57/02

(54) **Verfahren, Vorrichtungen und Anlage zur Pyrolyse von Reststoffen zur Erzeugung von Synthesegas**

(30) Priorität: 10.10.2003 DE 10348142
(71) Anmelder: Circutec Focus on Future GmbH, 04109 Leipzig (DE)
(72) Erfinder: Stützel, Michael, 03054 Cottbus (DE)
(74) Vertreter: Uhlemann, Henry, Dipl. Chem.

(57) **Zusammenfassung**

Die Erfindung betrifft ein Verfahren, Vorrichtungen und eine Anlage zur Pyrolyse von Reststoffen zur Erzeugung von Synthesegas zur Verstromung. Reststoffe sind dabei zellulosehaltige Naturstoffe, Synthesestoffe und Kunststoffe, Reststoffe aus technischen Prozessen, Komponenten aus der Entsorgungswirtschaft und Abfallstoffe. Erfindungsgemäß erfolgt die Pyrolyse (6,7) von Reststoffen zur Erzeugung von Synthesegas mit einem Verfahren und einer Anlage bei dem Reststoffe einem Reaktor mit Misch- (6a) und Hochtemperaturkammer (6b) zugeführt werden, wobei in der Mischkammer (6a) eine Trocknung und Anschwelung bei 350 - 700°C erfolgt, wobei das angeschwelte Gut der Hochtemperaturkammer (6b) zugeführt und dort bei 700 bis 1000°C verschwelt wird und wobei Pyrolysegut und Pyrolysegas/Dampfgemisch in gleicher Richtung geführt werden. Das in Misch- (6a) und Hochtemperaturkammer (6b) entstehende Gas/Dampfgemisch wird mit dem weitgehend verschwelten Pyrolysegut einer Nachverschwelung (7) zugeführt und das bei der Nachverschwelung (7) anfallende Gas/Dampfgemisch anschließend unter Zufuhr von Heißluft und/oder Heißdampf bei 800 bis 1000°C gekrackt (12) und zu Synthesegas umgesetzt, und das so hergestellte Gasgemisch gewaschen und gekühlt.

## Beschreibung

Die Erfindung betrifft ein Verfahren, Vorrichtungen und eine Anlage zur Pyrolyse von Reststoffen zur Erzeugung von Synthesegas zur Verstromung. Reststoffe sind dabei zellulosehaltige Naturstoffe, Synthesestoffe und Kunststoffe, Reststoffe aus technischen Prozessen, Komponenten aus der Entsorgungswintschaft und Abfallstoffe.

Unter Thermolyse bzw. Pyrolyse versteht man die Erwärmung von organischem Material in einer sauerstoffreduzierten Atmosphäre. Bei dieser Pyrolyse entstehen Gase, kondensierbare Flüssigkeiten (Wasser, Öle und Teere) und ein Feststoff (Asche mit Kohlenstoff und nicht vollständig pyrolysiertem Material).

Der Prozess der Thermolyse bzw. Pyrolyse wird schon sehr lange kommerziell angewendet. Meist wird er in Kombination mit anderen thermischen Verfahren wie Vergasung oder Verbrennung gebraucht. Folgende Verfahren sind bekannt:

### KWU-Schwel-Brenn-Verfahren

Das KWU-Verfahren der Fa. Siemens besteht aus einer Kombination von Abfallpyrolyse mit anschließender Verbrennung. Die Abfälle werden im Drehrohrofen unter Luftabschluss auf ca. 450°C erhitzt. Die Pyrolysegase werden sofort in einem Heizkessel verbrannt. Die festen Rückstände werden aufbereitet und die kohlenstoffhaltige Feinfraktion wird ebenfalls der Verbrennung zugeführt. Lediglich Metalle und Mineralstoffe werden aus dem Pyrolyseprozess ausgeschleust. Die anderen Stoffe (Koks, Pyrolyseöl und -gas) werden konventionell verbrannt und dann über Heißdampf und Turbine/Generator zu elektrischem Strom umgewandelt. Der Einsatz der Pyrolyseprodukte in einem Gasmotor ist nicht möglich. Daher ist der elektrische Wirkungsgrad auch geringer. Außerdem muss eine aufwendige Rauchgasreinigung nachgeschaltet werden, da das Gas nicht gereinigt wird.

### Noell-Konversionsverfahren

Das Noell-Konversionsverfahren besitzt als erste Stufe eine Pyrolyse. Das anfallende Pyrolysegas wird in einem Quench abgekühlt, der Pyrolysekoks aufbereitet und gemahlen. Die brennbaren Fraktionen Pyrolysegas, Pyrolyseöl und Pyrolysekoks werden in einem Flugstromvergaser mit Sauerstoff vollständig zu CO und H₂ vergast. Dieses Synthesegas kann nach einer Gasreinigung dann weiter genutzt werden. Der Heizwert des Gases ist durch die Vergasung aber eher gering.

### Thermoselect-Verfahren

In diesem Verfahren wird der Abfall in einem Entgasungskanal erhitzt und pyrolysiert. Alle Produkte werden in einer anschließenden Hochtemperaturvergasung mit Sauerstoff zu CO und H₂ vergast. Die Gasreinigung erfolgt über eine mehrstufige Gasreinigung. Es gab und gibt Probleme, die Anlage mit dem erwünschten Durchsatz zu fahren. Außerdem sind die hochgesteckten Ziele der Gasreinigung nicht erfüllt worden, so dass mehrere Thermoselect-Projekte nicht realisiert wurden.

### Carbo-V-Verfahren

Beim Carbo-V-Verfahren werden Holzabfälle unter Teilverbrennung in einem Niedertemperaturreaktor verschwelt. Das Pyrolysegas und der aufbereitete Pyrolysekoks werden in einer weiteren Vergasungsstufe mit Sauerstoff oder Luft vergast und anschließend gereinigt. Das Verfahren wurde speziell für Holzabfälle entwickelt und ist daher nicht universell einsetzbar. Außerdem gibt es Probleme mit der Gasqualität.

Überwiegend werden Drehrohrreaktoren als Pyrolysereaktoren angewandt. Das darin eingebrachte Schwelgut wird pyrolysiert. Die Gase werden im Gleichstrom mit dem Produktstrom geführt. Die Verweilzeit der Gase im Drehrohrreaktor ist aber sehr gering.

Dadurch kann sich kein Gasgleichgewicht einstellen. Die anfänglich entstandenen, mindenwertigen Pyrolysegase CO₂ und H₂O werden somit relativ schnell aus der Reaktionszone befördert, ohne dass diese größtenteils, in intensiven Kontakt mit dem Koks, weiter entsprechend dem Gasgleichgewicht zu H₂ und CO reagieren können. Daher entstehen bei der Drehrohrpyrolyse minderwertigere Gase.

EP 1160307 A2 offenbart ein Verfahren und eine Vorrichtung zur thermischen Behandlung und chemischen Umsetzung von Natur- und Synthesestoffen, wobei ein Eingangsstoff mit einem Zwischenprodukt zur Zersetzung und Vergasung gebracht und ein Produktstrom aus Eingangsstoff und Zwischenprodukt biderektional zwischen Hochtemperaturkammer und Mischkammer des Schwelreaktors geführt, vergast und einem Nachschwelreaktor zur Beaufschlagung mit Pyrolyseöl zugeführt wird. Dazu wird ein Schwelreaktor mit einem aus Misch- und Hochtemperaturkammer bestehenden Schwelraum mit innenliegender Transport- und Mischschnecke verwendet, wobei die auf einer Hohlwelle sitzende Transport- und Mischschnecke reversierend rotiert und über Öffnungen der Hohlwelle ein Brenngaseintritt und eine Luftzufuhr angeordnet sind.
Die reversierende Betriebsart der Reaktorschnecke führt bei zu kurzen Perioden zum Materialaufbau in der Mischerkammer, bei zu langen Perioden verpresst das Material im unteren Bereich des Reaktors. Somit ist es schwierig, für verschiedene Schneckendrehzahlen entsprechende Perioden festzulegen.

Großtechnisch wurde sehr oft der Versuch unternommen, eine Pyrolyse von Abfallstoffen vorzunehmen. Aufgrund unterschiedlichster Probleme sind derzeit die Verfahren nicht über den Demonstrations- bzw. Pilotanlagenstatus hinausgekommen.

Aufgabe der Erfindung sind deshalb Verfahren, Vorrichtungen und eine Anlage zur effektiven und ökonomischen Pyrolyse von Reststoffen.

Erfindungsgemäß wird die Aufgabe durch ein Verfahren zur Pyrolyse von Reststoffen zur Erzeugung von Synthesegas gelöst, bei dem Reststoffe einem Reaktor mit Mischund Hochtemperaturkammer zugeführt werden, wobei in der Mischkammer eine Trocknung und Anschwelung bei 350 - 700°C und das in der Mischkammer angeschwelte Gut der Hochtemperaturkammer zugeführt und dort bei 700 bis 1000°C verschwelt wird. Das in Misch- und Hochtemperaturkammer entstehende Gas/Dampfgemisch wird in gleicher Richtung wie das Pyrolysegut gefördert.

Die Zuführung der Reststoffe in den Reaktor erfolgt über ein Schleusensystem so, dass kein oder nur wenig Sauerstoff (Luft) in den Reaktor gelangt.

In der Hochtemperaturkammer wird das angeschwelte Gut mittels innenliegender, nach oben fördernder Ringschnecke transportiert. Dabei besteht zwischen Schneckenrand und Reaktorwand ein Spalt, der einen guten Pyrolysegasdurchsatz aber auch ein Au s-trag von verschweltem Pyrolysegut in gleicher Richtung mit dem Pyrolysegas/Dampfgemisch ermöglicht. In Abhängigkeit der zu pyrolysierenden, gegebenenfalls zu zerkleinernden Reststoffe ist die Größe des Spaltes maximal 100 mm.

Das in Misch- und Hochtemperaturkammer entstehende Gas/Dampfgemisch wird mit dem weitgehend verschwelten Pyrolysegut einer Nachverschwelung zugeführt, anschließend unter Zufuhr von Heißluft und/oder Heißdampf bei 800 bis 1000°C gekrackt und zu Synthesegas umgesetzt. Das so hergestellte Gasgemisch wird gewaschen und gekühlt. Vorteilhaft werden vom bei der Nachverschwelung anfallenden Gas/Dampfgemisch Staubpartikel abgetrennt.

Vorzugsweise wird das Pyrolysegas mehrfach gewaschen und bis zum ersten Wäscher auf Temperatur gehalten und im Wäscher schockgekühlt.

Bei der Gaswäsche anfallende Teerölfraktionen und/oder Feststoff-Schweröl-Fraktionen werden in den Pyrolysereaktor zurückgeführt und bei der Gaswäsche anfallende Pyrolyseflüssigkeiten thermisch gespalten.

In der ersten Wäscherstufe kondensierte Schweröle und ausgewaschene Feststoffe werden über einen Dekanter vom Waschmedium abgeschieden. Dadurch wird das Waschmedium nicht mit störenden Verunreinigungen belastet und der einwandfreie Wäscherbetrieb ermöglicht. Die direkt abgeschiedene Feststoff-Schweröl-Fraktion wird in den Schwelreaktor zurückgeführt.

Die in den Abscheidern der Wäscherkreise abgeschiedene Ölfraktion wird in einen selbstregelnden Cracker (18) eingespeist. Hier werden Pyrolyseöle unter Wärmezufuhr bei 400°C bis 600°C zersetzt. Die Selbstregelung des Crackers erfolgt über den durch die Verdampfung der Crackprodukte entstehenden Druck, und die Auslegung der zum Crackersystem zugehörigen Aggregate.

Die in den Wäschern kondensierten Pyrolyseöle bilden mit dem Wäschermedium eine Emulsion, die nicht in herkömmlichen Abscheidern trennbar ist. Um die Ölfraktion von der Wasserfraktion zu trennen, wird die Emulsion thermisch gespalten. Dies geschieht in einer Destillationskolonne. Die Emulsion wird verdampft und unmittelbar kondensiert. Als Ergebnis erhält man ein zweiphasiges Produkt, welches mit einem herkömmlichen Abscheider trennbar ist.

In den Reststoffen enthaltene Schwermetalle werden durch Adsorbtions- und Absorptionsvorgänge in den sich bildenden Pyrolysekoks eingebunden. Aufgrund der Temperaturen weit unterhalb der Siedetemperatur der Schwermetalle sind Verdampfungsvorgänge stark eingeschränkt. Nur leichtflüchtige Schwermetalle wie z. B. Quecksilber und Cadmium, werden zu einem hohen Anteil gasförmig mit dem Gas ausgetragen. Alle andere Schwermetalle werden dagegen als Anhaftungen an Kokspartikeln mit dem Pyrolysegas mitgerissen.

Im Pyrolysegas enthaltener Koks wird größtenteils im Heißgaszyklon abgeschieden und anhaftende Schwermetalle dort aus dem Gasstrom ausgetragen.

Gasförmig gebundene bzw. an Feinstpartikeln anhaftende Schwermetalle werden in der Gaswäsche abgeschieden. Dabei reagieren die Schwermetalle mit im Gas bzw. in der Wäscherflüssigkeit vorhandenen Stoffen wie z.B. Chlorwasserstoff und Schwefelwasserstoff zu Salzen. Diese Salze werden in der Waschflüssigkeit der Gaswäsche gelöst und in eine Destillationskolonne ausgeschleust. Dort werden diese Salze zusammen mit den nicht verdampfbaren Bestandteilen abgeschieden und über einen Cracker in den Nachschwelreaktor zurückbefördert. Im Nachschwelreaktor werden diese Salze dann mit dem Pyrolysekoks über ein Schleusensystem aus dem System gebracht.

Das erfindungsgemäße Verfahren erlaubt die Pyrolyse sehr unterschiedlicher Reststoffe, wie zum Beispiel die Pyrolyse heizwertreicher Fraktionen einer Müllaufbereitungsanlage, die Pyrolyse von Shredderleichtfraktionen aber auch die Pyrolyse von Spuckstoffen, Hühnermist oder Olivenkernen. Falls die Größe der Reststoffe für die Thermolyseanlage zu groß ist, müssen diese aufbereitet (zerkleinert) werden. Beim Einsatz von feinkörnigen Stoffen vergrößert man den Schneckendurchmesser des Pyrolysereaktors. Dadurch verringert sich der theoretische Ringspalt auf Werte zwischen ca. 50 bis 10 mm.

Erfindungsgemäß wird die Aufgabe mit einer Anlage für die Pyrolyse von Reststoffen zur Erzeugung von Synthesegas gelöst, die im wesentlichen aus Aufgabestation, Förder- und Austragseinrichtungen, Pyrolysereaktor, Nachschwelreaktor und Gaswäsche besteht.

Förder- und Austragseinrichtungen (4) bzw. (9) weisen eine Schleusenfunktion auf.

Die Fördereinrichtung besteht aus einem Bunker für die Reststoffe, Speicher, Förderschnecke mit Schleusenfunktion (4), Zellradschleuse (4c) und Eintragsschnecke (5).

Die Förderschnecke mit Schleusenfunktion (4) selbst besteht aus einem Schieber am Eingang (4a), einem Pufferbehälter/Förderer (4b), der das Material in eine Zellradschleuse (4c) transportiert. Die Zellenradschleuse (4c) arbeitet diskontinuierlich und ist nur in Betrieb, wenn der Schieber (4a) geschlossen und die Förderschnecke (4) inertisiert ist. So wird sichergestellt, dass kein (oder nur wenig) Sauerstoff in den Reaktor (6) gelangt. Über die Zellradschleuse (4c) und Eintragsschnecke (5) werden die Reststoffe in die Mischkammer (6a) des Reaktors (6) eingetragen. Damit keine Luft in den Reaktor (6), bzw. Produktgas in die Atmosphäre strömen kann, wird die Förderschnecke in jedem Zyklus inertisiert.

Der Reaktor (6) für die Pyrolyse von Reststoffen zur Erzeugung von Synthesegas weist einen aus einer Mischkammer (6a) und einer Hochtemperaturkammer (6c) bestehenden Schwelraum mit Eintritt- (6g) und Austrittstutzen (6h) auf. Vor dem Eintrittstutzen (6g) ist ein die Reststoffzuführung gasdicht abtrennendes Schleusensystem angeordnet, so dass keine Luft in den Reaktor (6) oder Produktgas in die Atmosphäre strömen kann.

Mischkammer (6a) und Hochtemperaturkammer (6c) sind von einer Brennkammer (6d) umgeben, wobei die Brennkammer (6d) im Bereich der Hochtemperaturkammer (6c) Brenner (6i) zur Außenbeheizung der Hochtemperaturkammer (6c) aufweist und die aufsteigende heiße Luft die Mischkammer (6a) umströmt, bevor sie über den an der Brennkammer angeordneten Abgasstutzen (6k) abgeführt wird.

Mischkammer (6a) und Hochtemperaturkammer (6c) weisen eine über eine Welle (6m) von einem Getriebemotor (61) angetriebene Reaktorschnecke (6b) zum Stofftransport auf, wobei an der Welle (6m) im Bereich der Mischkammer ein oder mehrere Rührarme (6j) angeordnet sind.

Die über den Eintrittstutzen (6g) zugeführten Reststoffe werden in der Mischkammer (6a) gemischt und teilpyrolysiert. Der Boden der Mischkammer ist konisch ausgebildet, so dass das angeschwelte Gut in die Hochtemperaturkammer (6c) abfallen kann.

Die Reaktorschnecke (6b) ist eine einfache Vollschnecke und wird mit aufwärts fördernder Drehrichtung über eine Welle (6m) vom Motor (61) angetrieben.

Durch Drehzahländerung der Reaktorwelle (6m) ist die Einstellung der Entgasungsgeschwindigkeit und des Durchsatzes möglich.

Erfindungsgemäß ist der Durchmesser der Hochtemperaturkammer (6c) größer ist als der Durchmesser der Reaktorschnecke (6b). Dabei besteht zwischen Schneckenrand und Reaktorwand ein Ringspalt, der einen guten Pyrolysegasdurchsatz aber auch ein Austrag von verschweltem Pyrolysegut in gleicher Richtung mit dem Pyrolysegas/Dampfgemisch über den Austrittstutzen (6h) ermöglicht. In Abhängigkeit der zu pyrolysierenden, gegebenenfalls zu zerkleinernden Reststoffe ist die Größe des Ringspaltes ≤ 100 mm.

In einer vorteilhaften Ausgestaltung der Erfindung sind an der Mischkammer (6a) ein Stütz- oder Festlager und in oder an der Hochtemperaturkammer (6c) ein Loslager für die Welle (6m) angeordnet. Damit wird dass die Schneckengänge der Reaktorschnecke (8b) direkt die Rohrwand der Hochtemperaturkammer (6c) berühren. Dies gewährleistet eine Flexibilität zwischen Wandung der Hochtemperaturkammer und Schneckenrand gegenüber dem durchzusetzenden Pyrolysegut.

Dem Pyrolysereaktor (6) ist mindestens ein Nachschwelreaktor (7) nachgeschalten. Der Nachschwelreaktor besteht aus einem schräg gelagerten Schneckenapparat mit Aussenwandheizung.

In Schneckenwellenrichtung sind auf der Rückseite der Schneckengänge (7d) Paddel (7e) befestigt, die in Drehrichtung einander überlappen und parallel zur Schneckenwelle (7c) stehen. So wird der Gasweg kaum verkleinert, der Koks erfährt eine ständige Durchmischung und wird darüber hinaus in den Gasstrom geführt, wodurch eine stärkere Reaktion zwischen Gas und Koks stattfinden kann. Dies gewährleistet die weitestgehende Ver- bzw. Entgasung unter Einstellung eines spezifischen Gasgleichgewichtes.

In einer vorteilhaften Ausgestaltung des Nachschwelreaktors (7) ist die Schnecke im Durchmesser um bis zu 75 mm kleiner als der Schneckenbehälter. Der Zwischenraum zwischen Schneckengang und Schneckenschuß kann so leichter vom Gas durchströmt werden.

Vorteilhaft weist die erfindungsgemäße Anlage einen Heißgaszyklon (11) zur Abscheidung grober Staubpartikel auf.

Für die Aufbereitung des mit Staubpartikeln befrachteten Rohgases ist eine Nachvergasungsrohr (12) angeordnet, welches dem Heißgaszyklon (11) nachgeschaltet ist. Das Nachvergasungsrohr (12) besteht im wesentlichen aus einem, der Verweilzeit entsprechend dimensioniertem Rohr mit einem Sicherheitsbrenner (12a), einer Luft-/Sauerstoffeinspeisung (12b), einer Heißdampfzuführung (12c) und eingeschweißten Wirbelblechen (12d). Der Sicherheitsbrenner (12a) verhindert bei Temperaturen unter 800°C die Bildung von explosiven Gemischen, da bei niedrigeren Temperaturen eine sichere Selbstverbrennung nicht gewährleistet ist. Die Wirbelbleche (12d) dienen der schnellen und guten Durchmischung der Reaktionspartner. Die eingespeiste heiße Luft reagiert mit den mikrofeinen Kohlenstoffpartikeln und Gasbestandteilen, verbunden mit einem Temperaturanstieg. Durch die Einspeisung von Heißdampf wird eine Wassergas-Reaktion hervorgerufen, deren Reaktionsergebnisse Wasserstoff und Kohlenmonoxid/dioxid sind. Weiterhin werden durch die hohen Temperaturen zwischen 800°C und 1000°C langkettige Kohlenwasserstoffe gekrackt. Am Ende des Nachvergasungsrohres (12) ist die feine Koksstaub-Fraktion nahezu vollständig abreagiert und die Teer- und Schwerölfraktion ist wenig bis kaum vorhanden. Durch die nur teilweise Verbrennung wird ein hoher Heizwert des Gases erhalten, und die Gasausbeute durch die Wassergasreaktion erhöht. Durch den Einsatz von Sauerstoff an Stelle von Luft können sich keine schädliche Stickstoffverbindungen bilden und der Heizwert des Gases erhöht sich. Dies steht allerdings wirtschaftlichen Faktoren entgegen, da der Einsatz von reinem Sauerstoff kostenintensiver ist.

Um eine Rekombination der langkettigen Kohlenwasserstoffe zu verringern bzw. zu vermeiden, wird das Gas bis zum ersten Wäscher (13) auf Temperatur gehalten und im Wäscher schockgekühlt. Problematisch ist dabei, das alle kalten Stellen, die von heißem Gas berührt werden, auch vom Wäschermedium bespült werden müssen, damit sich keine Kondensate anlagern und einen Kuchen aufbauen. Dazu wird der Gaseintrittstutzen (13h) durch die Wandung in den Wäscher geführt und rundherum beheizt. Damit kein Wäschermedium in das Rohr fließt, fällt es unter einem Winkel von etwa 10° in den Wäscher und der vordere Rand ist schräg geschnitten, so dass die obere Kante vorragt. Beheizt wird der Gaseintrittstutzen mit heißem Abgas des Nachschwelreaktors.

Vorteilhaft weist die erfindungsgemäße Anlage einen Cracker (18) für die Crackung und Rückführung von Teerprodukten zur Pyrolyse sowie eine Destillationskolonne (19) zur thermischen Spaltung anfallender Pyrolyseflüssigkeiten auf.

In der ersten Wäscherstufe (13) der Gaswäsche kondensierte Schweröle und ausgewaschene Feststoffe werden über einen Dekanter vom Waschmedium abgeschieden. Dadurch wird das Waschmedium nicht mit störenden Verunreinigungen belastet und der einwandfreie Wäscherbetrieb ermöglicht. Die direkt abgeschiedene Feststoff-Schweröl-Fraktion wird in den Schwelreaktor (6) zurückgeführt.

Die in den Abscheidern der Wäscherkreise abgeschiedene Ölfraktion wird in einen selbstregelnden Cracker (18) eingespeist. Hier werden Pyrolyseöle unter Wärmezufuhr bei 400°C bis 600°C zersetzt. Die Selbstregelung des Crackers (18) erfolgt über den durch die Verdampfung der Crackprodukte entstehenden Druck, und die Auslegung der zum Crackersystem zugehörigen Aggregate.

Die in den Wäschern kondensierten Pyrolyseöle bilden mit dem Wäschermedium eine Emulsion, die nicht in herkömmlichen Abscheidern trennbar ist. Um die Ölfraktion von der Wasserfraktion zu trennen, wird die Emulsion thermisch gespalten. Dies geschieht in einer Destillationskolonne. Die Emulsion wird verdampft und unmittelbar kondensiert. Als Ergebnis erhält man ein zweiphasiges Produkt, welches mit einem herkömmlichen Abscheider trennbar ist.

Anhand beigefügter Zeichnungen werden Ausführungsbeispiele der Erfindung näher erläutert. Dabei zeigen:
- Fig. 1a + b: Blockschaltbild einer Pyrolyseanlage
- Fig. 2: Schnittdarstellung Pyrolysereaktor
- Fig. 3: Ausschnitt Schnecke Nachschwelreaktor
- Fig. 4: Schnittdarstellung Nachvergasungsrohr
- Fig. 5: Schnittdarstellung Pyrolysgaseintritt in Wäscher (13)

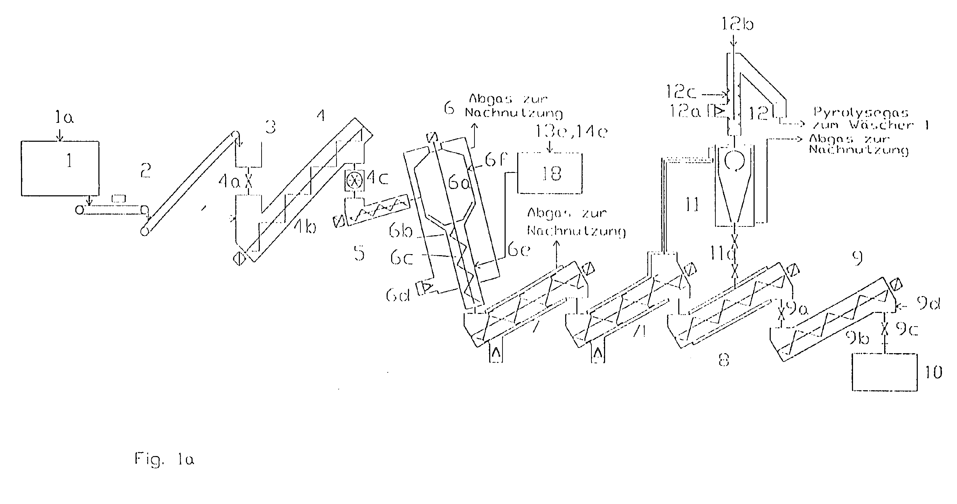

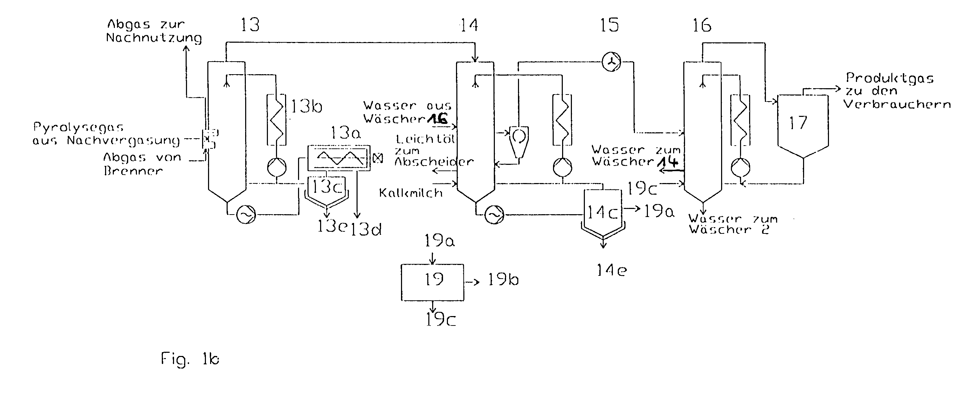

**Fig.1 a und b** zeigen ein Blockschaltbild einer Pyrolyseanlage. Die Pyrolyseanlage besteht im wesentlichen aus Aufgabestation (mit Bunker (1), Förderbändern (2) und Speicher (3)), Förderschnecke mit Schleusenfunktion (4), Pyrolysereaktor (6), Nachschwelreaktor (7), Abkühlschnecke (8), Austragschnecke mit Schleusensystem (9), Heißgaszyklon (11), Nachvergasungsrohr (12), Gaswäsche (13 - 15), Gaslager (17), Cracker (18) und Destillationskolonne (19).

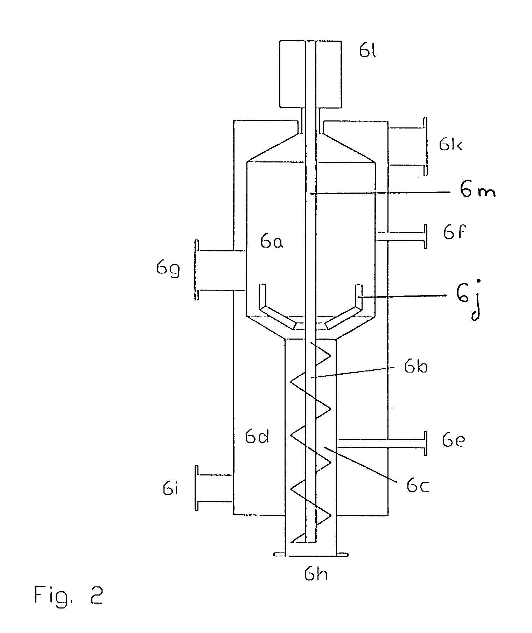

Die für die Pyrolyseanlage bestimmten Reststoffe, größtenteils aus organischen Material (z.B. Holz, Papier, Kunststoffe) bestehend, werden in einen Bunker mit Schubboden (1) aufgegeben (1a) und über ein Förderband (2) in einen Speicher (3) vor der Schleuse (4) gefördert. Die Förderschnecke mit Schleusenfunktion (4) besteht aus einem Schieber am Eingang (4a), einem Pufferbehälter/Förderer (4b), der das Material in eine Zellradschleuse (4c) transportiert. Die Zellenradschleuse (4c) arbeitet diskontinuierlich und ist nur in Betrieb, wenn der Schieber (4a) geschlossen und die Förderschnecke (4) inertisiert ist. So wird sichergestellt, dass kein (oder nur wenig) Sauerstoff in den Reaktor (6) gelangt. Über die Zellradschleuse (4c) und Eintragsschnecke (5) werden die Reststoffe in die Mischkammer (6a) des Reaktors (6) eingetragen. Damit keine Luft in den Reaktor (6), bzw. Produktgas in die Atmosphäre strömen kann, wird die Förderschnecke in jedem Zyklus inertisiert.
Im Pyrolysereaktor (6) werden die Reststoffe, wie zu Fig. 2 näher beschrieben, weitgehend verschwelt.

Das nun schon weitgehend verschwelte Pyrolysegut (Koks) gelangt mit dem Pyrolysegas/Dampfgemisch in den Nachschwelreaktor (7), wo Temperaturen zwischen 400°C und 1000°C herrschen. Dort schwelt der Koks vollständig aus und die in der Mischkammer (6a) und Hochtemperaturkammer (6c) entstandenen Dämpfe und Gase werden über die Koksschicht geleitet.

Aus dem Nachschwelreaktor (7) gelangt der Koks in die Abkühlschnecke (8) und wird von dort über ein Schleusensystem (9) mit Inertgaseinspeisung (9d), bestehend aus zwei Schiebern (9a,c) und der Austragsschnecke (9b) in den Container (10) gefördert. Der Koks wird dabei indirekt über die Rohrwand gekühlt.

Das Gas-/Dampfgemisch, beladen mit einer geringen Staubfracht strömt vom Nachschwelreaktor (7) in die Nachvergasung. Diese besteht aus einem Heißgaszyklon (11) zur Abscheidung der Staubpartikel größer 5µm, sowie dem Nachvergasungsrohr (12) Durch die Einspeisung von Heißluft bzw. Heißsauerstoff in das Nachvergasungsrohr (12) wird die Temperatur durch Teilverbrennung von Gasbestandteilen und Kokspartikeln auf 800°C bis 1000°C angehoben. Durch die entsprechende Verweilzeit (ca. 3s bis 10s) bei hohen Temperaturen werden langkettige Kohlenwasserstoffe gekrackt, sowie eine Rekombination gekrackter Kohlenwasserstoffe verhindert. Der fein partikuläre Kohlenstoff reagiert entweder mit dem im Gas enthaltenen Wasserdampf oder mit dem (Luft-)Sauerstoff zu Kohlenoxiden. Wird Heißdampf eingespeist ist eine weitere Reaktion von Wasserdampf mit Kohlenstoff bzw. dem Gas möglich (Wassergasreaktion). Der im Heißgaszyklon (11) abgeschiedene Koks wird über ein Schleusensystem (11a) der Abkühlschnecke (8) zugeführt.

Dem Nachvergasungsrohr (12) schließt sich eine mehrstufige Gasreinigung an. In der ersten Wäscherstufe (13) werden die noch im Gasgemisch verbliebenen Feststoffe ausgewaschen und Pyrolyseöle und Wasser kondensiert. Dieses Gemisch wird über einen Dekanter (13a) geleitet, der Feststoffe zusammen mit Schweröl (schwerer als Wasser) austrägt. Die vom Dekanter (13a) ausgetragenen Feststoffe (13d) werden in den Reaktor (6, 6f) gefördert. Die so gereinigte, im Kreislauf gefahrene Wäscherflüssigkeit wird in einem Wärmetauscher (13b) gekühlt und wieder verdüst. Gleichzeitig werden in der ersten und den nachfolgenden Wäscherstufen die Gase gekühlt, verbliebene Kondensate kondensiert und Schadstoffe (wie z.B. Chlor) gebunden und neutralisiert. Die weitere Gaswäsche ist modular, je nach Schadstoffbelastung, aufgebaut. Dem ersten Wäscher (13) sind 2 weitere Wäscher (14 und 15) nachgeschaltet. Das Funktionsprinzip ist dabei immer gleich und üblich. Die Waschflüssigkeit kühlt den Gasstrom, nimmt Schadstoffe und organische Substanzen auf. Die Schadstoffe bzw. die Kohlenwasserstoffe werden aus der Flüssigkeit abgetrennt, diese wird gekühlt und wieder verdüst.

Das Gasgemisch wird mittels einer Lüfterstufe aus dem Reaktor (6) gesaugt, so dass im Reaktor (6) ca. Umgebungsdruck herrscht. Gleichzeitig erhöht sich in den der Lüfterstufe folgenden Wäscherstufen (16) der Druck, wodurch verbliebene Dämpfe besser kondensieren.

Im nachgeschalteten Gaslager (17) wird das Gasgemisch entsprechend den Erfordernissen getrocknet und in einem Gastank gepuffert. Von hier aus gelangt das Gasg emisch zu den Verbrauchern.

Die in den Waschmedien sich anreichernden Kondensate (13e,14e) werden über geeignete Abscheider (13c, 14c) aus den Wäscherkreisen geschleust. Die Teere werden über den Cracker (18) direkt zurück in den Reaktor (6, 6e) geführt. Im Cracker (18) herrschen Temperaturen zwischen 400 und 600°C. Durch diese hohen Temperaturen wird der Teer gekrackt und verdampft. Dieser Dampf kann einen gewissen Druck erzeugen, da der Volumenstrom sehr viel größer wird, der Rohrquerschnitt aber gleich bleibt. Der Druck im Cracker (18) kann daher zwischen 0 und 8 bar (ü) schwanken.

Die niedrigviskosen, leichten Flüssigkeiten (Leichtöl, Dichte<1) werden abgeschieden und als Heizölersatz weitervewveutet.

Kreislaufwasser (19a) wird aufbereitet, indem es in einer Destillationskolonne (19) erhitzt und verdampft wird. Der Dampf wird umgehend kondensiert und es bildet sich eine Wasser- und eine Ölphase aus, wodurch die Leichtöle (19b) abgeschieden werden können. Das Abwasser wird einer Abwasseraufbereitung zugeführt bzw. für die Kalkmilchbereitung und als Waschmedium genutzt (19c).

**Fig. 2** zeigt in Schnittdarstellung den Pyrolysereaktor (6) mit der Mischkammer (6a), der Reaktorschnecke (6b) mit Rührarmen (6j), der Hochtemperaturkammer (6c), der Brennkammer (6d) dem Stutzen für Crackprodukte (6e), dem Stutzen für Feststoff-Teer-Gemisch (6f), dem Eintrittstutzen (6g), dem Austrittstutzen (6h), dem Brennerstutzen (6i), dem Abgasstutzen (6k) und dem Getriebemotor (61).

Mischkammer (6a) und Hochtemperaturkammer (6c) sind von der Brennkammer (6d) umgeben und werden außen beheizt. Im Bereich der Hochtemperaturkammer (6c) sind Brenner angeordnet. Die aufsteigende heiße Luft umströmt die Mischkammer (6a) bevor sie über den Abgasstutzen (6k) abgeleitet wird.

Die Reststoffe werden im Reaktor (6) von oben nach unten geführt. Die Reststoffe werden in der Mischkammer (6a) gemischt, teilpyrolysiert und fallen dann in die Hochtemperaturkammer (6c).

Um zu verhindern, dass Material am Mischkammerboden liegen bleibt und somit den Wärmeübergang deutlich verringert, ist der Boden konisch ausgebildet, so dass das gesamte Material ständig in Bewegung bleibt und gut abgefördert werden kann. Gegenüber der Mischkammer (6a) weist die Hochtemperaturkammer (6c) einen kleineren Querschnitt auf.

Zur Verbesserung der Durchmischung in der Mischkammer (6a) und zur Verhinderung des Aufbaus von Materialschichten an der Reaktorwand (was den Wärmeübergang negativ beeinflusst), sind an der Welle (6m) ein oder mehrere Rührarme (6j) angebracht.

Die Reaktorschnecke (6b) ist eine einfache Vollschnecke und wird mit aufwärts fördernder Drehrichtung über eine Welle (6m) vom Motor (61) angetrieben.

Die Hochtemperaturkammer (6c) besteht aus einem Rohr, welches größer ist als die Reaktorschnecke (6b). Dabei besteht zwischen Schneckenrand und Wandung der Hochtemperaturkammer ein Spalt, der einen guten Pyrolysegasdurchsatz aber auch ei n Austrag von verschweltem Pyrolysegut in gleicher Richtung mit dem Pyrolysegas/Dampfgemisch über den Austrittstutzen (6h) ermöglicht. In Abhängigkeit der zu pyrolysierenden, gegebenenfalls zu zerkleinernden Reststoffe beträgt die Größe des Spaltes maximal 100 mm.

Dadurch, dass die Welle (6m) aber nur oben gelagert ist und am unteren Ende der Schnecke ein Führungsring angebracht ist, der verhindern soll, dass die Schneckengänge direkt die Rohrwand berühren, besteht eine Flexibilität zwischen Wandung der Hochtemperaturkammer und Schneckenrand gegenüber dem durchzusetzenden Pyrolysematerial.

Die Reaktorschnecke (6b) ragt nur ein kleines Stück in die Mischkammer (6a). Die Durchmischung der Mischkammer übernimmt die an der Welle (6m) befestigten Rührarme (6j).

### Der in Fig. 2 dargestellte Pyrolysereaktor arbeitet wie folgt:

Über den Eintrittstutzen (6g) werden zerkleinerte Reststoffe der Mischkammer (6a) des Reaktors (6) zugefühnt. In der Mischkammer (6a) werden die Reststoffe erhitzt, das enthaltene Wasser verdampft und es finden erste Entgasungsprozesse statt. Durch das ständige Rotieren der Reaktorschnecke (6b), Schneckenförderrichtung aufwärts, und den an der Welle (6m) befestigten Rührarmen (6j) werden die Reststoffe durchmischt und kommen so auch mit der 350°C bis 700°C heißen Wandung der Mischkammer (6a) in Berührung. Dabei pyrolysieren die Reststoffe an der heißen Reaktorwand. Gebildeter Kohlenstoff und noch nicht vollständig pyrolysiertes Material werden durch die ständige Durchmischung wieder in die eingetragenen Reststoffe zurückgefördert, dienen als Wärmeträger und verhindern durch die ständige Beimischung außerdem das Verkleben des Kunststoffes zu großen Klumpen. Durch die Querschnittsveränderung von der Mischkammer (6a) zur Hochtemperaturkammer (6c) wird außerdem verhindert, dass größere Kunststoffklumpen (z.B. wenn die Abmischung mit teilverschweltem Material nicht vollständig ist) schnell durch die Anlage gefördert werden, sondern in der Mischkammer (6a) solange verschwelt werden, bis nur noch kleine, schnell erwärmbare Teilchen vorhanden sind. Bei der Durchmischung klumpen die Reststoffe zu Agglomeraten aus Holz-Koks-Kunststoff-u.ä.. Wenn sich diese erwärmen, wird der Kunststoff zähflüssig und das Holz beginnt als erstes zu pyrolysieren. Durch das sich bildende Pyrolysegas steigt die Porosität des Agglomerates und schließlich zerfallen die Klumpen. Es erfolgt also eine thermische Zerstörung der sich bildenden Agglomerate. Dieser Prozeß wird durch die ständige Durchmischung mit bereits pyrolisiertem Material befördert.

Von der Mischkammer (6a) gelangt das teilverschwelte und weitgehend wasserfreie Material in die Hochtemperaturkammer (6c). Die Hochtemperaturkammer (6c) ist von der Brennkammer (6d) umgeben, in der Temperaturen von 700°C bis 1200°C herrschen. In der Hochtemperaturkammer (6c) wird das Material weitgehend verschwelt, durch die aufwärts gerichtete Drehbewegung der Reaktorschnecke (6b) wird das Material durchmischt und von den abwärts geführten Schwelgasen und Dämpfen, die in der Mischkammer (6a) entstehen, durchströmt, wodurch die in der Hochtemperaturkammer (6c) entstehenden Gase und Dämpfe mit denen der Mischkammer (6a) reagieren.

Durch den intensiven Kontakt der Pyrolyseprodukte mit den Schwelgasen der Mischkammer (6a) und Hochtemperaturkammer (6b) wird die Einstellung von Gasgleichgewichten verbessert. So kann die Gasqualität bei dieser Apparateausführung besser als bei Drehrohrreaktoren eingestellt werden.

Die Stutzen (6e) und (6f) dienen zur Einbringung von flüssigen bzw. pastösen Medien in den Reaktor. Je nach Konsistenz können diese wahlweise in die Mischkammer oder in die Hochtemperaturkammer eingebracht werden. Diese Stutzen dienen auch dem Einbringen von reagierten Stoffen aus dem Cracker (18).

Das entstehende Pyrolysegas wird im Gleichstrom mit dem festen Pyrolyseprodukt geführt. Das entstehende Gas kann nur nach unten durch die Hochtemperaturkammer (6c) entweichen, da es die einzigste Möglichkeit ist, aus der Mischkammer (6a) zu gelangen. Die Zuführung über den Eintrittstutzen (6g) ist durch ein Schleusensystem gasdicht verschlossen.

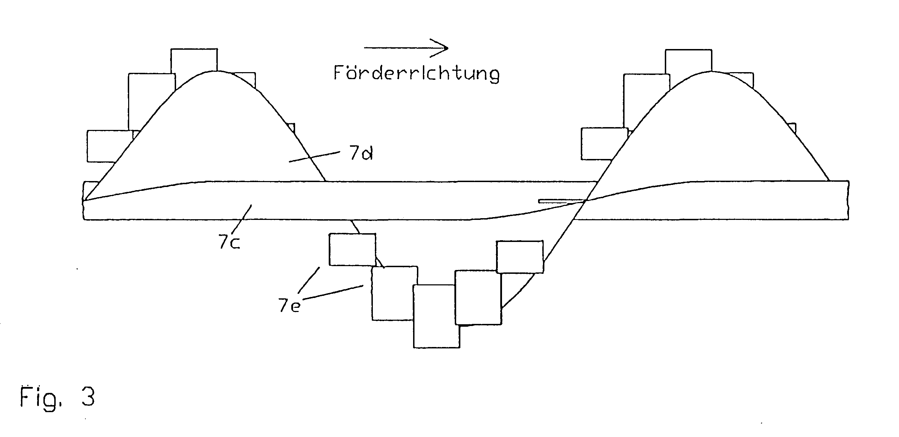

**Fig. 3** zeigt einen Ausschnitt der Schnecke des Nachschwelreaktors (7) mit Schneckenwelle (7c), Schneckengang (7d) und Paddel (7e). Die Besonderheit sind die in Schneckenwellenrichtung auf die Rückseite der Schneckengänge (7d) aufgeschweißten Paddel (7e), die den Koks mischen und in den Gasstrom fördern.

Der Nachschwelreaktor (7) besteht aus einem schräg gelagerten Schneckenapparat mit Aussenwandheizung. Die Schnecke des Nachschwelreaktors (7) ist im Durchmesser kleiner als der Schneckenbehälter, so dass zwischen Schneckengang und Schneckenschuß ein Zwischenraum von maximal 75 mm besteht. Der Zwischenraum zwischen Schneckengang und Schneckenschuß kann so leichter vom Gas durchströmt werden.

In Schneckenwellenrichtung sind auf der Rückseite der Schneckengänge (7d) Paddel (7e) befestigt, die in Drehrichtung einander überlappen und parallel zur Schneckenwelle (7c) stehen. So wird der Gasweg kaum verkleinert, der Koks erfährt eine ständige Durchmischung und wird darüber hinaus in den Gasstrom geführt, wodurch eine stärkere Reaktion zwischen Gas und Koks stattfinden kann. Dies gewährleistet die weitestgehende Ver- bzw. Entgasung unter Einstellung eines spezifischen Gasgleichgewichtes.

Der Nachschwelreaktor mit dem nach Fig. 3 dargestellte Schneckenaufbau arbeitet wie folgt:

Das aus dem Pyrolysereaktor (6) weitgehend verschwelte Material (Koks) sowie das Pyrolysegas werden dem Nachschwelreaktor (7) zugeführt, wo Temperaturen zwischen 400°C und 1000°C herrschen. Dort schwelt der Koks vollständig aus und die in der Mischkammer (6a) und Hochtemperaturkammer (6c) entstandenen Dämpfe und Gase werden über die Koksschicht geleitet. Die Paddel (7e) nehmen den heißen Koks in unmittelbarer Nähe des Schneckenschusses auf, befördern ihn an die Oberfläche. Durch die weitere Drehbewegung wird der Koks in die Gasphase mit eingebracht. Ein Teil des Kokses wird vom Gas mitgerissen, ein anderer Teil fällt irgendwann zurück auf das Koksbett. Durch diese Konstruktion wird somit gewährleistet, dass der heiße Koks an der Rohrwand ständig weggefördert wird und somit neuer, kühlerer Koks sich aufheizen kann und durch den Kontakt von Koks und Gas sich das Gasgleichgewicht weitestgehend ausbilden kann.

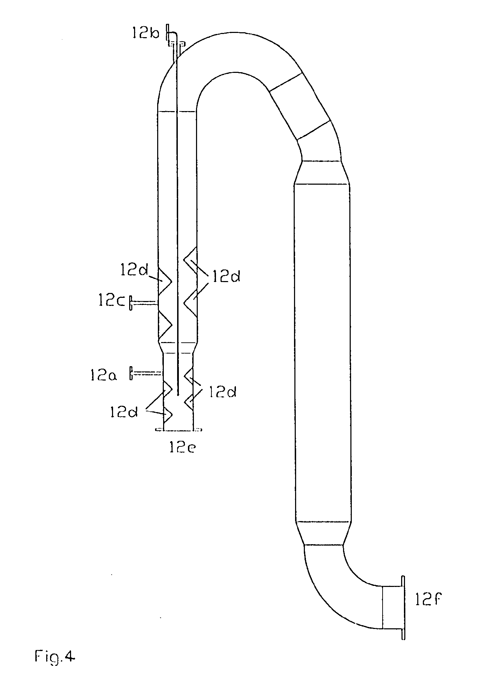

Fig. 4 zeigt die Schnittdarstellung des Nachvergasungsrohres (12) mit Sicherheitsbrenner (12a), Heißluftanschluss (12b), Heißdampfanschluss (12c), Wirbelblechen (12d), Pyrolysegaseintrittstutzen (12e) und Pyrolysegasaustrittstutzen (12f).

Das aus dem Nachschwelreaktor (7) abgeführte Gas enthält neben Gas auch Kokspartikel. Diese werden weitestgehend mit einem Heißgaszyklon abgeschieden. Feine Koksbestandteile bleiben aber im Gas und werden durch die Nachvergasung zur Reaktion gebracht.

Im Nachvergasungsrohr wird daher Luft oder Sauerstoff über den Heißluftanschluss (12b) zugeführt. Um eine gute Mischung der beiden Gase (Luft bzw. Sauerstoff und Pyrolysegas mit Koks) sicherzustellen, müssen beide Gase eine möglichst gleiche Temperatur besitzen. Daher muss das Vergasungsmittel (Luft/Sauerstoff) angewärmt werden. Dies erfolgt durch Luftzuführung im Gegenstrom. Das heiße Gas erwärmt somit das Vergasungsmittel. Die zusätzlich angebrachten Wirbelbleche (12d) verstärken den Effekt der Mischung von Luft/Sauerstoff und Gas.

Um sicherzustellen, dass das Gas auch mit dem Vergasungsmittel reagiert, wird ein Zündbrenner (12a) installiert, der sicherstellt, dass sich kein explosives Luft-Gas-Gemisch bilden kann.

Je nach Abfallzusammensetzung kann es sein, dass im Pyrolysegas sich nicht genug Wasserdampf befindet, um den gesamten Koks zur Reaktion zu bringen. Daher ist die Möglichkeit einer zusätzlichen Heißdampfeinspeisung (12c) vorgesehen. Diese erfolgt nachdem das Gas durch Teilverbrennung eine hohe Reaktionstemperatur erreicht hat. Zur besseren Mischung von Pyrolysegas mit dem eingepressten Wasserdampf sind ebenfalls Wirbelbleche (12d) angebracht.

Eine senkrechte Anordnung des Vergasungsrohres ist sinnvoll, da bei Betriebsstörungen im Zyklon der Staub im Vergasungsrohr zumindest teilweise abgeschieden werden kann. Außerdem wird bei einer senkrechten Anordnung die Gefahr der Ablagerungen von Koks auf der Rohroberfläche minimiert.

Nachdem das Gas-/Dampfgemisch zur Abscheidung von Staubpartikeln den Heißgaszyklon passiert hat, wird es dem Nachvergasungsrohr (12) mit Sicherheitszündbrenner (12a), Heißlufteinspeisung (12b) und Heißdampfeinspeisung (12c) zugeführt. Durch die Einspeisung von Heißluft bzw. Heißsauerstoff (12b) in das Nachvergasungsrohr (12) wird die Temperatur durch Teilverbrennung von Gasbestandteilen und Kokspartikeln auf 800°C bis 1000°C angehoben. Durch die entsprechende Verweilzeit (ca. 3s bis 10s) bei hohen Temperaturen werden langkettige Kohlenwasserstoffe gekrackt, sowie eine Rekombination gekrackter Kohlenwasserstoffe verhindert. Der fein partikuläre Kohlenstoff reagiert entweder mit dem im Gas enthaltenen Wasserdampf oder mit dem (Luft-) Sauerstoff zu Kohlenoxiden. Wird Heißdampf eingespeist ist eine weitere Reaktion von Wasserdampf mit Kohlenstoff bzw. dem Gas möglich (Wassergasreaktion).

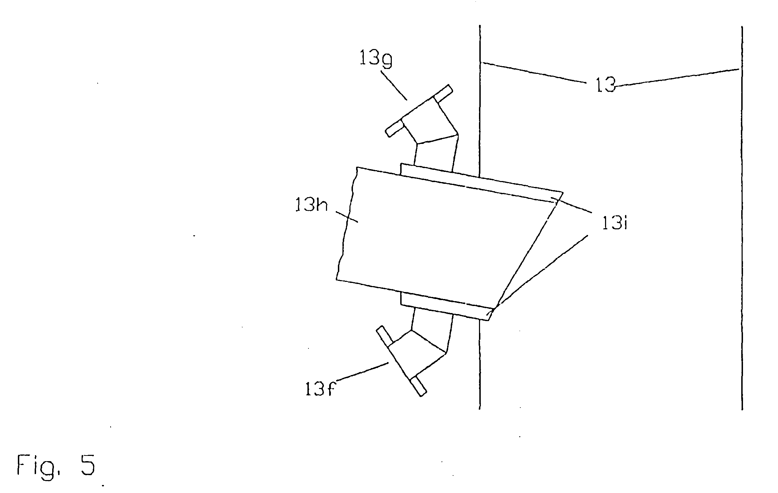

Fig. 5 zeigt die Schnittdarstellung des Produktgaseintritt in den Wäscher (13) mit Pyrolysegaseintrittstutzen (13h), Heizmantel (13i) mit besonderen Einbauten zur Wärmeverteilung und den Anschlüssen (13f, 13g) für die Beheizung mit heißem Abgas. Diese Konstruktion dient der Verhinderung des Anbackens von kondensierenden Öl-Teer-Koks-Gemischen an der Eintrittsöffnung des Rohgases. Dazu wird der Gaseintrittstutzen (13h) durch die Wandung in den Wäscher geführt und rundherum beheizt. Damit kein Wäschermedium in das Rohr fließt, fällt es unter einem Winkel von etwa 10° in den Wäscher und der vordere Rand ist schräg geschnitten, so dass die obere Kante vorragt. Beheizt wird der Gaseintrittstutzen (13h) mit heißem Abgas des Nachschwelreaktors.

Die erfindungsgemäße Anlage sowie die zugehörigen Vorrichtungen eignen sich auch für die Pyrolyse besonderer Rest- bzw. Abfallstoffe. Am Beispiel der Pyrolyse einer Shredderleichtfraktion wird dies näher beschrieben:

Als Shredder-Leichtfraktion wird ein Stoffgemisch bezeichnet. Diese Material fällt beim Zerkleinern von Schrott (z.B. Altautos, Altmaschinen) an. Das zerkleinerte Gemisch wird in einem Sichter in Leicht- und Schwerfraktion getrennt. Die Leichtfraktion besteht daher naturgemäß u.a. aus Kunststoffen (z.B. PUR, Gummi, PVC), Naturstoffen (z.B. Holz, Papier, Textilien) und Inertstoffen (z.B. Metalle, Glas). Charakteristisch für Shredder-Leitfraktion ist ein erhöhter Anteil an Schwermetallen und organischen Schadstoffen.

Die Pyrolyse der Shredder-Leichtfraktion erfolgt analog des zu Fig. 1 beschriebenen Verfahrensablaufs.

In der Shredder-Leichtfraktion enthaltene Schwermetalle werden im Nachschwelreaktor (7) bzw. in der Abkühlschnecke (8) durch Adsorbitions- und Absorbtionsvorgänge in den sich bildenden Pyrolysekoks eingebunden. Aufgrund der Temperaturen weit unterhalb der Siedetemperatur der Schwermetalle sind Verdampfungvorgänge stark eingeschränkt. Nur leichtflüchtige Schwermetalle wie z. B. Quecksilber und Cadmium, werden zu einem hohen Anteil gasförmig mit dem Gas ausgetragen. Alle andere Schwermetalle werden dagegen als Anhaftungen an Kokspartikeln mit dem Gas mitgerissen. Da der im Gas enthaltene Koks größtenteils im Heißgaszyklon (11) abgeschieden wird, werden die anhaftenden Schwermetalle dort aus dem Gasstrom ausgetragen. Der so abgeschiedene schweimetallbelastete Koksstaub wird in die Abkühlschnecke (8) gefördert und dann mit dem anderen, nicht ausgetragenen Koks weiterverarbeitet. Die anderen Schwermetalle (gasförmig bzw. an Feinstpartikeln anhaftend) werden in der Gaswäsche abgeschieden. Dabei reagieren die Schwermetalle mit im Gas bzw. in der Wäscherflüssigkeit vorhandenen Stoffen wie z.B. Chlorwasserstoff und Schwefelwasserstoff zu Salzen. Diese Salze werden in der Waschflüssigkeit der Gaswäsche gelöst und in die Destillationskolonne ausgeschleust. Dort werden diese Salze zusammen mit den nicht verdampfbaren Bestandteilen abgeschieden und über den Cracker (18) in den Nachschwelreaktor (7) zurückbefördert. Im Nachschwelreaktor werden diese Salze dann mit dem Koks über das Schleusensystem (9) aus dem System gebracht.

Die in die Pyrolyse eingetragenen organischen Schadstoffe werden durch die herrschenden Temperaturen im Reaktor (6), dem Nachreaktor (7) und im Nachvergasung srohr (12) weitestgehend zerstört. Da diese Crackreaktion aber nicht vollständig ist werden die nicht umgesetzten Stoffe in der Gasreinigung abgeschieden. Dazu wird das Gas in den Wäschersystemen (13, 14, 16) gekühlt. Dabei kondensieren die meisten organischen Schadstoffe. Die anderen Schadstoffe werden in der Wäscherflüssigkeit gelöst oder emulgieren. Die organischen Schadstoffe reichern sich in der Wäscherflüssigkeit größenteils in der Öl/Teerfraktion an und werden dem Cracker (18) zugeführt. Im Cracker wird ein Großteil der organischen Schadstoffe zerstört. Die verbleibenden Schadstoffe werden, zusammen mit dem Gas, in das Reaktorsystem eingespeist und dann solange über den Kreislauf Nachschwelreaktor (7)-Nachvergasungsrohr( 12)-Gaswäsche( 13, 14, 16)-Cracker(18) behandelt bis diese vollständig zerstört sind.

Das in der Shredder-Leichtfraktion enthaltene Material enthält z.T. Stickstoff (z.B. PUR). Diese Stickstoffverbindungen können in der Pyrolyse Cyanwasserstoff bilden. Der restliche Stickstoff wird elementar oder als Ammoniak ausgetragen. Dieser Ammoniak und Cyanwasserstoff wird in der Gaswäsche neutralisiert und abgeschieden. Dabei reagieren die Stickstoffverbindungen mit im Gas bzw. in der Wäscherflüssigkeit vorhandenen Stoffen wie z.B. Schwermetallen zu Salzen. Diese Salze werden in der Waschflüssigkeit der Gaswäsche gelöst und in die Destillationskolonne ausgeschleust. Dort werden diese Salze zusammen mit den nicht verdampfbaren Bestandteilen abgeschieden und über den Cracker (18) in den Nachschwelreaktor (7) zurückbefördeit. Im Nachschwelreaktor werden diese Stickstoff-Salze stoffspezifisch entweder in den Koks eingebettet oder durch die Temperaturerhöhung erneut gespalten. Der sich wiederum bildendende Cyanwasserstoff wird zu einem hohen Anteil im Nachschwelreaktor gecrackt und somit entgiftet. Das sich bildende Ammoniak reagiert mit sauen Gasbestandteilen (z.B. Chlorwasserstoff) und wird als thermisch stabiles Salz aus der Gaswäsche ausgetragen.

Je nach Konzentration an Schwermetallen, organischen Schadstoffen und Cyanwasserstoff im Pyrolysegas müssen weitere Wäscherstufen analog der Wäscherstufe 3 (16) nachgeschalten werden.

Sollte der Pyrolysekoks einen hohen Anteil an verwertbaren Metallen aufweisen ist es sinnvoll, diese durch ein Extramodul abzuscheiden. Dazu wird der Koks zuerst gesiebt um feine Kokspartikel aus dem Gemisch zu entfernen und anschließend über Standardverfahren (Eisenmetall- und Nichteisenmetallabscheidung) weiter zu trennen.

### Aufstellung der verwendeten Bezugszeichen

- 1: Schubboden
- 1 a: Aufgabe
- 2: Förderband
- 3: Speicher
- 4: Förderschnecke mit Schleusenfunktion
- 4 a: Schieber am Eingang
- 4 b: Pufferbehälter/Förderer
- 4 c: Zellradschleuse
- 5: Eintragsschnecke
- 6: Pyrolysereaktor
- 6 a: Mischkammer
- 6 b: Reaktorschnecke mit Rührarmen
- 6 c: Hochtemperaturzone
- 6 d: Brennkammer
- 6 e: Stutzen
- 6 f: Stutzen
- 6 g: Eintrittsstutzen
- 6 h: Austrittsstutzen
- 6 i: Brennerstutzen
- 6 j: Rührarme
- 6 k: Abgasstutzen
- 61: Getriebemotor
- 6 m: Welle
- 7: Nachschwelreaktor
- 7c: Schneckenwelle
- 7d: Schneckengang
- 7e: Paddel
- 8: Abkühlschnecke
- 9: Austragsschleusensystem
- 9 a: Schieber 1
- 9 b: Austragsschnecke
- 9 c: Schieber 2
- 9 d: Inertgaseinspeisung
- 10: Container
- 11: Heißgaszyklon
- 12: Nachvergasungsrohr
- 12 a: Sicherheitsbrenner
- 12 b: Heißluftanschluss
- 12 c: Heißdampfanschluss
- 12 d: Wirbelblech
- 12e: Pyrolysegaseintrittstutzen
- 12 f: Pyrolysegasaustrittstutzen
- 13: Wäscherstufe 1
- 13a: Dekanter
- 13 b: Wärmetauscher
- 13 c: Abscheider
- 13 d: Feststoff zum Reaktor
- 13 e: Kondensate zum Cracker
- 13f: Anschlüsse
- 13 g: Anschlüsse
- 13 h: Pyrolysegaseintrittstutzen
- 13 i: Heizmantel
- 14: Wäscherstufe 2
- 14 c: Abscheider
- 14 e: Kondensate zum Cracker
- 15: Gaslüfter
- 16: Wäscherstufe 3
- 17: Gaslager
- 18: Cracker
- 19: Destillationskolonne
- 19 a: Kreislaufwasser
- 19 b: Leichtöl
- 19 c: Wasser

## Patentansprüche

1. Verfahren zur Pyrolyse von Reststoffen zur Erzeugung von Synthesegas,
- bei dem Reststoffe einem Reaktor mit Misch- und Hochtemperaturkammer zugeführt werden, wobei in der Mischkammer eine Trocknung und Anschwelung bei 350 - 700°C erfolgt, wobei das angeschwelte Gut der Hochtemperaturkammer zugeführt und dort bei 700 bis 1000°C verschwelt wird und wobei Pyrolysegut und Pyrolysegas/Dampfgemisch in gleicher Richtung geführt werden,
- bei dem das in Misch- und Hochtemperaturkammer entstehende Gas/Dampfgemisch mit dem weitgehend verschwelten Pyrolysegut einer Nachverschwelung zugeführt wird,
- bei dem das bei der Nachverschwelung anfallende Gas/Dampfgemisch anschließend unter Zufuhr von Heißluft und/oder Heißdampf bei 800 bis 1000°C gekrackt und zu Synthesegas umgesetzt, und das so hergestellte Gasgemisch gewaschen und gekühlt wird.

2. Verfahren nach Anspruch 1, **dadurch gekennzeichnet, dass** die Zufuhr der Reststoffe in den Reaktor so erfolgt, dass kein oder nur wenig Sauerstoff in den Reaktor gelangt.

3. Verfahren nach Anspruch 1 oder 2, **dadurch gekennzeichnet, dass** in der Hochtemperaturschwelkammer zu verschwelendes Gut mittels innenliegender, nach oben fördernder Ringschnecke transportiert wird und dass zwischen Schneckenrand und Reaktorwand ein Ringspalt besteht, der eine Führung von Pyrolysegut und Pyrolysegas/Dampfgemisch im Gleichstrom erlaubt.

4. Verfahren nach jeweils einem der Ansprüche Anspruch 1 bis 3, **dadurch gekennzeichnet, dass** vom bei der Nachverschwelung anfallenden Gas/Dampfgemisch Staubpartikel abgetrennt werden.

5. Verfahren nach jeweils einem der Ansprüche 1 bis 4, **dadurch gekennzeichnet, dass** bei der Gaswäsche anfallende Teerölfraktionen und/oder Feststoff-Schweröl-Fraktionen in den Reaktor zurückgeführt und bei der Gaswäsche anfallende Pyrolyseflüssigkeiten thermisch gespalten werden.

6. Verfahren nach jeweils einem der Ansprüche 1 bis 5, **dadurch gekennzeichnet, dass** das Gas/Dampfgemisch mehrfach gewaschen und bis zur ersten Wäsche auf Temperatur gehalten und im Wäscher schockgekühlt wird.

7. Reaktor für die Pyrolyse von Reststoffen zur Erzeugung von Synthesegas mit einem aus einer Mischkammer (6a) und einer Hochtemperaturkammer (6c) bestehenden Schwelraum mit Eintritt- (6g) und Austrittstutzen (6h), wobei Mischkammer (6a) und Hochtemperaturkammer (6c) von einer Brennkammer (6d) bis auf die Stutzen (6g, 6h) und einem Getriebemotor (61) umgeben sind, die Brennkammer (6d) im Bereich der Hochtemperaturkammer (6c) Brenner zur Außenbeheizung der Hochtemperaturkammer (6c) aufweist und heiße Luft die Mischkammer (6a) vor dem Abführen über den Abgasstutzen (6k) umströmt, die Hochtemperaturkammer (6c) eine über eine Welle (6m) in der Mischkammer (6a) und der Hochtemperaturkammer (6c) von dem Getriebemotor (61) angetriebene Reaktorschnecke (6b) zum Stofftransport aufweist und an der Welle (6m) im Bereich der Mischkammer wenigstens ein Rührarm (6j) angeordnet ist, **dadurch gekennzeichnet,**
- **dass** der Innendurchmesser der Hochtemperaturkammer (6c) größer als der Außendurchmesser der Reaktorschnecke (6b) ist, so dass zwischen Schneckenrand und Reaktorwand ein die Führung von Pyrolysegut und Pyrolysegas/Dampfgemisch in gleicher Richtung erlaubender Spalt besteht,
- **dass** die Reaktorschnecke (6b) mit dem Getriebemotor (61) so gekoppelt ist, dass eine in Richtung der Mischkammer (6a) fördernde Drehrichtung vorhanden ist und
- **dass** vor dem Eintrittstutzen (6g) ein die Reststoffzuführung gasdicht abtrennendes Schleusensystem angeordnet ist.

8. Reaktor nach Anspruch 7, **dadurch gekennzeichnet, dass** an der Mischkammer (6a) ein Stütz- oder Festlager und in oder an der Hochtemperaturkammer (6c) ein Loslager für die Welle (6m) angeordnet sind

9. Nachschwelreaktor für die Pyrolyse von Reststoffen zur Erzeugung von Synthesegas bestehend aus einem außenbeheizten Schneckenapparat, **dadurch gekennzeichnet, dass** in Schneckenwellenrichtung auf der Rückseite der Schneckengänge (7d) Paddel (7e) befestigt sind, die in Drehrichtung einander überlappen und parallel zur Schneckenwelle (7c) stehen, so dass Pyrolysegut in unmittelbarer Nähe des Schneckenschusses aufgenommen und durch die Drehbewegung nach außen befördert wird.

10. Nachschwelreaktor nach Anspruch 9, **dadurch gekennzeichnet, dass** zwischen Schneckengang (7d) und Schneckenschuss ein Zwischenraum kleiner 75 mm besteht.

11. Nachvergasungsrohr für die Pyrolyse von Reststoffen zur Erzeugung von Synthesegas mit einem Sicherheitsbrenner (12a), einem Heißluftanschluss (12b), einem Heißdampfanschluss (12c), Wirbelblechen (12d), einem Pyrolysegaseintrittstutzen (12e) und einem Pyrolysegasaustrittstutzen (12f), **dadurch gekennzeichnet, dass** die Abmessungen des Nachvergasungsrohres (12) durch die bestimmte Verweilzeit des Gases bestimmt sind und dass der Heißluftanschluss (12b) so angeordnet ist, dass Luft oder Sauerstoff dem strömenden Pyrolysegas mit Pyrolysepartikeln entgegenströmt, so dass durch im Gegenstrom die Luft oder der Sauerstoff durch das Pyrolysegas mit den Pyrolysepartikeln erwärmt wird.

12. Gaswäscher für die Pyrolyse von Reststoffen zur Erzeugung von Synthesegas, im wesentlichen bestehend aus einem Behälter mit einem Gaseintrittstutzen, einem Gasaustrittstutzen, einem Einlass und einem Auslass für Wäschermedium, **dadurch gekennzeichnet, dass** der Gaseintrittstutzen (13h) beheizbar ist und dass der Gaseintrittstutzen geneigt durch die Wandung des Wäscher (13) geführt und schräg endend ist, so dass kein Wäschermedium in die Gaszuführung gelangt.

13. Anlage für die Pyrolyse von Reststoffen zur Erzeugung von Synthesegas, im wesentlichen bestehend aus Aufgabestation, Förder- und Austragseinrichtungen, Pyrolysereaktor, Nachschwelreaktor und Gaswäsche, **dadurch gekennzeichnet, dass** die Förder- und Austragseinrichtungen (4, 9) eine Schleusenfunktion aufweisen, dass der Reaktor (6) für die Pyrolyse entsprechend der Ansprüche 7 bis 9 aufgebaut ist, dass dem Reaktor (6) für die Pyrolyse mindestens ein Nachschwelreaktor (7) entsprechend Anspruch 10 nachgeschaltet ist, und dass die Anlage ein Nachvergasungsrohr (12) entsprechend Anspruch 11 aufweist.

14. Anlage nach Anspruch 13, **dadurch gekennzeichnet, dass** zwischen Nachschwelreaktor (7) und Nachvergasungsrohr (12) ein grobe Staubpartikel abscheidender Heißgaszyklon (11) angeordnet ist.

15. Anlage nach Anspruch 13 oder 14 , **dadurch gekennzeichnet, dass** nach dem Gaswäscher ein Cracker (18) für die Crackung und Rückführung von Teerprodukten zur Pyrolyse in den Reaktor (6) und/oder dem Nachschwelreaktor (7) angeordnet ist.

16. Anlage nach jeweils einem der Ansprüche 13 bis 15 , **dadurch gekennzeichnet, dass** nach dem Gaswäscher eine Destillationskolonne zur thermischen Spaltung anfallender Pyrolyseflüssigkeiten angeordnet ist und dass die Destillationskolonne mit dem Cracker (18) verbunden ist.
